# EUROPÄISCHE PATENTSCHRIFT

(11) **EP 1 615 770 B1**
(45) Veröffentlichungstag und Bekanntmachung des Hinweises auf die Patenterteilung: **14.11.2012**
(21) Anmeldenummer: 04726468.4
(22) Anmeldetag: 08.04.2004
(51) Int. Cl.: B32B 27/18, B32B 27/08

(54) **BIAXIAL ORIENTIERTE POLYPROPYLENFOLIE MIT KALTSIEGELKLEBERBESCHICHTUNG UND GUTEN GLEITEIGENSCHAFTEN**
BIAXIALLY ORIENTED POLYPROPYLENE FILM PROVIDED WITH A COLD-SEAL ADHESIVE COATING AND HAVING EXCELLENT LUBRICATING PROPERTIES
FEUILLE DE POLYPROPYLENE A ORIENTATION BIAXIALE POURVUE D'UN REVETEMENT ADHESIF POUR SOUDAGE PAR PRESSION A FROID ET POSSEDANT DE BONNES PROPRIETES DE GLISSEMENT

(30) Priorität: 11.04.2003 DE 10316623
(43) Veröffentlichungstag der Anmeldung: 18.01.2006
(73) Patentinhaber: Treofan Germany GmbH & Co.KG, 66539 Neunkirchen (DE)
(72) Erfinder: SPEITH-HERFURTH, Angela, 63329 Egelsbach (DE); HANSOHN, Robert, 66459 Kirkel (DE)
(74) Vertreter: Mai, Dörr, Besier
(86) Internationale Anmeldenummer: PCT/EP2004/003751
(87) Internationale Veröffentlichungsnummer: WO 2004/089621

(56) Entgegenhaltungen:
- EP-A- 0 182 463
- EP-A- 0 645 426
- WO-A-00/73064
- US-A- 3 740 366
- US-A- 5 681 650
- US-A- 5 798 174

## Beschreibung

Die Erfindung betrifft eine Polypropylenfolie mit einer Beschichtung aus Kaltsiegelklebem, die sehr gute Gleit- und Siegeleigenschaften aufweist.

Biaxial orientierte Polypropylenfolien (boPP) werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Zur Herstellung einer Verpackung aus diesen Folien werden Siegelverfahren eingesetzt, bei denen mittels Druck und erhöhter Temperaturen die Außenschichten der Folien verklebt werden (Heißsiegelung). Für die Verpackung temperaturempfindlicher Güter kommen Kaltsiegelschichten zum Einsatz, die nur unter Druck bei Raumtemperatur vertrieben. Derartige Kaltsiegelkleber basieren auf natürliche oder synthetischen Latex-Zusammensetzungen, die auf eine äußere Folienoberfläche aufgetragen werden. Die gegenüberliegende Seite darf beim Aufwickeln der so beschichteten Folie nicht mit dem Kaltsiegelkleber verkleben oder verblocken und wird daher im allgemeinen als Release-Seite bezeichnet. Zur Sicherstellung hinreichender Release-Eigenschaften dieser Seite wird häufig ein geeigneter Lack aufgetragen oder gegen eine Releasefolie laminiert.

Es ist auch bekannt der Folie Additive zu zusetzen, die ein Verkleben der Kaltsiegelschicht mit der gegenüberliegenden Oberfläche verhindern. Diese Maßnahmen haben den Nachteil, daß die Siegeleigenschaften der Kaltsiegelkleberschicht beeinträchtigt werden können.

Des weiteren ist bekannt, daß eine rauhe Oberflächenstruktur der Kaltsiegelseite vorteilhaft für eine gute Verankerung der Kaltsiegelschicht auf der Folienoberfläche ist. Daher werden für diese Anwendungen häufig opake Folien mit einer vakuolenhaltigen Schicht oder mit einer pigmentierten Schicht eingesetzt, welche durch die Vakuolen oder die Pigmente eine größere Oberflächenrauheit als transparente Folien aufweisen. Für einige Anwendungen soll jedoch die hohe Transparenz der Polypropylenfolien erhalten bleiben. Für diese Typen ist die gute Verankerung der Kaltsiegelschicht besonders kritisch.

Im Stand der Technik werden verschiedene Folien vorgeschlagen, die vorteilhaft mit einer Kaltsiegelkleberbeschichtung versehen werden können. US 5,482,780 beschreibt eine Folie mit guter Haftung gegenüber Kaltsiegelklebern, die gleichzeitig auf der gegenüberliegenden Seite gute Release Eigenschaften aufweist Die Folie ist mehrschichtig und hat auf der Basisschicht aus Polypropylen zwei Deckschichten. Die Release-Deckschicht besteht aus einem Blend, welches ein Ethylen-Propylen-Copolymer enthält, welches einen geringen Ethylengehalt von 2 bis 8 % aufweist. Die zweite Komponente des Blends ist ein Ethylen-Butylen Copolymer welches 0,5 bis 6 % Ethylen enthält Dieser Seite ist ein nicht migrierendes Gleitmittel zugesetzt. Die gegenüberliegende Deckschicht, welche mit dem Kaltsiegelkleber beschichtet wird, ist aus einem Ethylen-Propylen-Copolymeren aufgebaut, welches zur Verbesserung der Kaltsiegelkleberhaftung coronabehandelt ist. Die Haftung der Kaltsiegelkleber sowie die Siegeleigenschaften des Kaltsiegelklebers sind verbesserungsbedürftig.

US 6,022,612 beschreibt ebenfalls eine mehrschichtige biaxial orientierte Polypropylenfolie mit einer Deckschicht für Kaltsiegelbeschichtungen. Diese Deckschicht ist aus einem Blend aus Polyolefin und einem Blockcopolymer. Blockcopolymere sind beispielsweise Styrol-Isoprene-Styrol Blockcopolymere oder Styrol-Butadien-Styrol Blockcopolymere. Diese Deckschicht weist eine matte Optik, aber eine gute Haftung der Kaltsiegelkleber auf. Die Folien haben auf Grund der Deckschichtmischung eine erhöhte Trübung, die nicht für alle Anwendungen akzeptiert wird.

US 5,981,047 beschreibt ebenfalls eine matte Folie für Kaltsiegelkleber anwendungen. Die Folie weißt eine Release-Deckschicht auf, welche aus einem Blend aufgebaut ist. Eine wesentliche Komponente diese Blend ist ein Ethylen-Butylen-Copolymer.

US 6,074731 beschreibt eine mehrschichtige Folie mit einer Deckschicht für Kaltsiegelbeschichtungen, die aus einem Blend zweier Komponenten besteht. Eine Komponente des Blends ist ein HDPE. Die zweite Blendkomponente ist ein Polyisobutylen. Diese Deckschichten sollen eine gute Haftung gegenüber Kaltsiegelklebem aufweisen.

EP 0 645 426 betrifft eine biaxial orientierte Polypropylenfolie, deren n-heptanunlöslicher Anteil einen Kettenisotaxie-Index, gemessen mittels ¹³C-NMR-Spektroskopie, von mindestens 95 % aufweist. Die Basisschicht enthält im wesentlichen kein Harz und der Elastizitätsmodul der Folie in Längsrichtung ist grösser 2 500 N/mm² und der Elastizitätsmodul der Folie in Querrichtung ist grösser 4 000 N/mm². Es sind siegelfähige Ausführungsformen der Folie beschrieben, Beschichtungen mit Kaltsiegelkleber sind jedoch nicht explizit erwähnt.

WO00/73064 beschreibt eine mehrschichtige Folie mit Kaltsiegelkleberbeschichtung. Die Folie weißt eine zusätzliche Schicht und eine funktionale Schicht auf. Auf die Oberfläche der funktionalen Schicht kann eine Kaltsiegelkleberschicht aufgebracht werden. Die zusätzliche Schicht enthält Antiblockmittel und Silikonöl.

EP 0 182 463 beschreibt eine mehrschichtige, siegelfähige Folie, welcheAntistatikum in ihrer Basisschicht enthält. Die siegelfähge Deckschicht ist mit Silikonöl und Antiblockmittel ausgerüstet, um gute Gleiteigenschaften sicherzustellen. Eine Kaltsiegelkleberbeschichtung ist in dieser Schrift nicht erwähnt.

Die Aufgabe der vorliegenden Erfindung bestand darin, eine biaxial orientierte Polypropylenfolie zur Verfügung zu stellen, welche für Kaltsiegelkleber-Anwendungen besonders gut geeignet ist. Die Folie soll eine Oberfläche aufweisen, welche mit einem Kaltsiegelkleber versehen werden kann und eine gute Haftung gegenüber dem Kaltsiegelkleber aufweist. Des weiteren soll der Kaltsiegelkleber eine gute Siegelfestigkeit gegen sich selbst aufweisen.

Andere Folieneigenschaften, die im Hinblick auf die Verwendung als Verpackungsfolle gefordert sind, dürfen nicht nachteilig beeinflußt werden. Die Folie soll einen hohen Glanz, keine optischen Defekte in Form von Stippen oder Blasen, einen störungsfreien Lauf auf schnellaufenden Verpackungsmaschinen und eine niedrige Folientrübung aufweisen.

Diese Aufgabe wird gelöst, durch eine mehrschichtige, transparente, biaxial orientierte Polypropylenfolie aus einer Basisschicht und mindestens einer ersten Deckschicht, wobei die Basisschicht ein Kohlenwasserstoffharz und die erste Deckschicht ein Polydialkylsiloxan mit einer Viskosität von mindestens 200.000 mm²/sec enthält und diese erste Deckschicht auf ihrer äußeren Oberfläche eine Kaltsiegelkleberbeschichtung aufweist und auf der, der ersten Deckschicht gegenüberliegenden Oberfläche, eine Release-Schicht als Außenschicht aufgebracht ist, deren Oberfläche gegenüber Kaltsiegelbeschichtungen eine geringe Haftung aufweist, wobei diese Release Schicht ein Release Lack, eine Releasefolie oder eine zweite coextrudierte Release-Deckschicht ist.

Die Basisschicht der Folie enthält im allgemeinen 80 bis <100 Gew.-%, insbesondere 85 bis 95 Gew.-%, jeweils bezogen auf die Basisschicht, Propylenpolymer.

Im allgemeinen enthält das Propylenpolymer mindestens 90 Gew.-%, vorzugsweise 94 bis 100 Gew.-%, insbesondere 98 bis 100 Gew.%, Propylen. Der entsprechende Comonomergehalt von höchstens 10 Gew.-%, bzw. 0 bis 6 Gew.% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 140 bis 170°C, vorzugsweise von 155 bis 165°C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 1 - 10 Gew.%, vorzugsweise 2-5 Gew.-% bezogen auf das Ausgangspolymere. Die Molekulargewichtsverteilung des Propylenpolymeren kann in breiten Grenzen variieren. Das Verhältnis des Gewichtsmittels M_{w} zum Zahlenmittel Mₙ liegt im allgemeinen zwischen 1 und 15.

Es ist erfindungswesentlich, daß die Basisschicht ein Kohlenwasserstoffharz (im englischen auch als'hard resin' bezeichnet) enthält, vorzugsweise in einer Menge von 5 bis 20 Gew.%, insbesondere 8 bis 15 Gew.%, bezogen auf das Gewicht der Basisschicht enthält.

Als Kohlenwasserstoffharze kommen grundsätzlich synthetische Harze oder Harze natürlichen Ursprungs in Frage, die im allgemeinen teilweise oder vollständig hydriert sind. Der Erweichungspunkt der Harze liegt im allgemeinen über 80 °C (gemessen nach DIN 1995-U4 bzw. ASTM E-28), wobei solche Harze mit einem Erweichungspunkt von 100 bis 180 °C, insbesondere 110 bis 160 °C, bevorzugt sind. Im allgemeinen haben die Kohlenwasserstoffharze ein mittleres Molekulargewicht Mn zwischen 500 und 2500 (Mw 500 bis 3000) und unterscheiden sich damit von langkettigen hochmolekularen Polymeren, deren Mw (Gewichtsmittel) im allgemeinen in der Größenordnung von 10.000 bis mehreren 100.000 liegt. Darüber hinaus sind Harze amorphe Substanzen, die bei Raumtemperatur glasartig und brüchig sind, weshalb man sie auch als hard resin bezeichnet. Auf Grund dieser Charakteristika sind Harze von Polymeren, insbesondere von Propylenpolymeren, Polyethylenen und ähnlichen hochmolekularen Substanzen verschieden. Für die Zwecke der vorliegenden Erfindung sind insbesondere Harze mit einem Mw von 600 bis 1200 und einem Erweichungspunkt von 100 bis 140°C bevorzugt.

Kohlenwasserstoffharze umfassen im Sinne der vorliegenden Erfindung beispielsweise Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffe der Formel C₁₀H₁₆, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohtenwasserstoffharzen kann es sich auch um die sogenannten modifizierten Kohtenwasserstofrharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von mindestens 140 °C oder Copolymerisate aus α-Methylstyrol und Vinyltoluol mit einem Erweichungspunkt von 120 bis 150 °C in der Basisschicht eingesetzt.

Zusätzlich zu der erfindungswesentlichen Komponente Harz kann die Basisschicht übliche Additive enthalten, vorzugsweise Neutralisationsmittel und Stabilisatoren, sowie gegebenenfalls zusätzlich Antistatika und/oder Gleitmittel in jeweils wirksamen Mengen, wobei der Basisschicht jedoch keine vakuoleninizierenden Füllstoffen oder Pigmente zugesetzt werden, da die Basisschicht ist transparent sein soll.

Bevorzugte Antistatika sind Alkali-alkansulfonate und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.%. Des weiteren kann Glycerinmonostearat in einer Menge von 0,03 % bis 0,5 % als Antistatikum eingesetzt.

Gleitmittel sind höhere aliphatische Säureamide, höhere aliphatische Säureester, Wachse und Metallseifen. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phe-notische Stabilisatoren, Alkali-/Erdalkalistearate und/oder Alkali-/Erdalkalicarbonate. Phenolische Stabilisatoren werden in einer Menge von 0,1 bis 0,6 Gew.%, insbesondere 0,15 bis 0,3 Gew.%, und mit einer Molmasse von mehr als 500 g/mol bevorzugt Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft. Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g_{.}

Die vorstehenden Angaben in % beziehen sich jeweils auf das Gewicht der Basisschicht

Die erfindungsgemäße Polypropylenfolie umfaßt mindestens eine Deckschicht im allgemeinen aus Propylenpolymeren. Geeignet sind Propylenhomopolymer oder Propylenmischpolymerisate, welche zum überwiegenden Teil Propylen enthalten. Im allgemeinen enthält die Deckschicht mindestens 80 Gew.%, vorzugsweise 85 bis < 100 Gew.%, insbesondere 95 - <100 Gew.%, an Propylenpolymeren, bezogen auf das Gewicht der Deckschicht

Isotaldische Propylenhomopolymere haben im allgemeinen einen Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Propylenhomopolymren beträgt im allgemeinen 1 bis 10 Gew.%, vorzugsweise 2-5 Gew.% bezogen auf das Ausgangspolymere.

Propylenmischpolymerisate enthalten überwiegend Propyleneinheiten, vorzugsweise in einer Menge mindestens 80 Gew.-%, bezogen auf das Propylenco - oder Propylenterpolymer. Als Comonomere sind Butylen oder Ethylen bevorzugt, deren Anteil entsprechend bis zu 20 Gew.-% beträgt. Beispiele für bevorzugte Propylenco- oder Propylenterpolymere sind statistische Ethylen-Propylen-Copolymere mit einem Ethylengehalt von 1 bis 10 Gew.%, bevorzugt 2,5 bis 8 Gew.%, oder statistische Propylen-Butylen-1-Copolymere mit einem Butylengehalt von 2 bis 25 Gew.%, bevorzugt 4 bis 20 Gew.%, jeweils bezogen auf das Gesamtgewicht des Copolymeren, oder statistische Ethylen-Propylen-Butylen-1-Terpolymere mit einem Ethylengehalt von 1 bis 10 Gew.%, bevorzugt 2 bis 6 Gew.%, und einem Butylen-1-Gehalt von 2 bis 20 Gew.%, bevorzugt 4 bis 20 Gew.-%, jeweils bezogen auf das Gesamtgewicht des Terpolymeren, oder ein Blend oder eine Mischung aus den genannten Propylenco- oder Propylenterpolymeren, wobei ein Blend aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.% und einem Butylen-1-Gehalt von 10 bis 40 Gew.%, jeweils bezogen auf das Gesamtgewicht des Polymerblends, besonders bevorzugt ist.

Die in der Deckschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Es ist erfindungswesentlich, daß die Deckschicht, welche mit der Kaltsiegelkleberbeschichtung versehen wird, ein hochviskoses Polydialkylsiloxan enthält. Erfindungsgemäß liegt die Viskosität des Polydialkylsiloxans in einem Bereich von 200.000 bis 500.000mm²/sec, vorzugsweise 250.000 bis 350.000 mm²/sec. Polydialkylsiloxane sind an sich im Stand der Technik als gängige Gleitmittel für Polypropylenfolien bekannt und werden auch als Silikonöle oder Siloxane bezeichnet. Siloxane werden unter anderem durch ihre Viskosität charakterisiert, die im Bereich von 10 bis 1.000.000mm²/sec liegen können. Es ist bekannt, daß diese Substanzen an die Oberfläche der Folie migrieren, um dort eine antiadhäsive Wirkung zu entfalten, bsp. bei Trennfolien oder um die Gleiteigenschaften zu verbessern. Die Silikonöle vermindern die Haftung der Folienoberfläche gegenüber anderen Oberflächen mit denen die Folie in Kontakt gebracht wird.

Überraschenderweise läßt sich die silikonölhaltige Deckschicht dennoch hervorragend mit einem Kaltsiegelkleber beschichten, wenn die Folie zusätzlich mit einem Kohlenwasserstoffharz in der Basisschicht modifiziert ist. Auf diese Weise können die Gleiteigenschaften der Folie durch das Silikonöl in an sich bekannter Weise vorteilhaft verbessert werden, aber gleichzeitig läßt sich die Folie überraschend gut mit Kaltsiegelkleber beschichtet. Es wurde gefunden, daß mehrere Faktoren erfüllt sein müssen, damit trotz Silikonöl die gute Kaltsiegelkleberhaftung auf der Folie und die Siegetnahtfestigkeit gewährleistet ist Zum einen muß die Basisschicht wie bereits beschrieben mit einem Harz modifiziert sein und zusätzlich muß ein Silikonöl mit einer ausgewählten Viskosität eingesetzt werden. Nur wenn die Viskosität des Silikonöls im Bereich von 200.000 bis 500.000mm²/sec liegt, können sowohl die gute Kaltsiegelkleberhaftung, eine gute Siegelnahtfestigkeit des Klebers als auch gute Gleiteigenschaften realisiert werden. Bei einer zu niedrigen Viskosität des Silikonöls wird die Haftung der Kaltsiegelkleberschicht stark beeinträchtig, bei einer zu hohen Viskosität werden wiederum die Reibung und die Optik der Folie negativ beeinflußt. Eine Folie, die nur mit Silikonöl in der Deckschicht ausgerüstet ist, zeigt eine unzureichende Haftung des Kaltsiegelklebers und folglich schlechte Siegeleigenschaften, auch wenn ein hochviskoses Silikonöl eingesetzt wird. Ohne Harz in der Basisschicht bringt die Variation der Viskosität des Silikonöls keine Verbesserung. Erst bei einer Kombination des Silikonöls mit einem Harz konnte ein hochviskoses Silikonöl gefunden werden, welches mit dem Harz derart zusammenwirkt, daß alle gewünschten Eigenschaften der Folie realisiert werden können.

Dieses Zusammenwirken von Harz und hochviskosem Silikonöl überrascht insbesondere in Anbetracht des bekannten Fachwissens, das Siloxan ein gängiges Gleitmittel ist, welches grundsätzlich die Haftung der silikonölhaltigen Folienoberfläche gegenüber anderen Oberflächen reduziert und dadurch die Gleitreibung und Trennwirkung der Folien wirksam verbessert.

Für die gute Haftung des Kaltsiegelklebers auf der Folienoberfläche und die Siegeleigenschaften in Verbindung mit den Gleiteigenschaften ist es somit wesentlich, daß die Basisschicht mit einem Harz und die Deckschicht mit einem hochviskosen Siloxan modifiziert ist, dessen Viskosität in dem ausgewählten Bereich von 200.000 bis 500.000 mm²/sec liegt.

Geeignete Polydialkylsiloxane mit dieser Viskosität die im Rahmen der vorliegenden Erfindung eingesetzt werden sind beispielsweise solche mit Alkylresten. Für die Zwecke der vorliegenden Erfindung sind Polydialkylsiloxane mit den C1- bis C4-Alkylgruppen besonders bevorzugt Im allgemeinen enthält die Deckschicht 0,5 bis 3 Gew.% des Polydialkylsiloxans, vorzugsweise 0,8 bis 2 Gew.%, bezogen auf das Gewicht der Deckschicht.

Gegebenenfalls können der Deckschicht die vorstehend für die Basisschicht beschriebenen Additive zugesetzt werden, worunter Antistatika, Neutralisationsmittel, und/oder Stabilisatoren, sowie Antiblockmittel bevorzugt werden. Die Angaben in Gew.-% beziehen sich dann entsprechend auf das Gewicht der Deckschicht

In einer bevorzugten Ausführungsform besteht die erste Deckschicht nur aus den vorstehend beschriebenen Propylenpolymeren, Polydialkylsiloxans mit einer Viskosität von 200.000 bis 500.000 mm²/s und Antiblockmittel, wobei die übliche Stabilisierung und Neutralisierung durch entsprechende Additive selbstverständlich nicht ausgeschlossen ist.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,1 bis 2 Gew.%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die erfindungsgemäße Folie umfaßt mindestens die vorstehend beschriebene Basisschicht und eine erste silikonölhaltige Deckschicht, welche bei der erfindungsgemäßen Verwendung mit Kaltsiegelkleber versehen wird. Im allgemeinen muß die gegenüberliegende Oberfläche der Folie eine Release Wirkung gegenüber dem Kaltsiegelkleber aufweisen, damit, z.B. beim Aufwickeln der Folie zu einer Rolle, der Kaltsiegelkleber nicht mit dieser zweiten Oberfläche verklebt. Dieser Release kann beispielsweise durch eine zweite gegenüberliegende Deckschicht realisiert werden, bei welcher man durch eine geeignete Rezepturierung den Release gegenüber dem Kaltsiegelkleber sicherstellt, beispielsweise durch Zusatz von Wachs. Es ist jedoch auch möglich die Oberfläche der gegenüberliegenden zweiten Deckschicht oder die Oberfläche der Basisschicht mit einem Releaselack zu versehen oder diese Oberfläche gegen eine weitere Release Folie zu laminieren. Geeignete Release Schichten oder Techniken sind im Stand der Technik bekannt

In einer bevorzugten Ausführungsform ist auf der gegenüberliegenden Oberfläche der Basisschicht eine zweite Deckschicht angebracht, wobei Aufbau, Dicke und Zusammensetzung einer zweiten Deckschicht unabhängig von der bereits vorhandenen ersten Deckschicht gewählt werden können. Die zweite Deckschicht kann grundsätzlich aus den gleichen für die erste Deckschicht beschriebenen Propylenpolymeren aufgebaut sein, gegebenenfalls können auch andere polyolefinische Polymere und Polymermischungen ausgewählt werden.

Die Dicke der ersten silikonölhaltigen Deckschicht/en ist im allgemeinen größer als 0,1 µm und liegt vorzugsweise im Bereich von 0,3 bis 3 µm, insbesondere 0,4 bis 1,5 µm. Die Dicke der zweiten Deckschicht liegt in einer ähnlichen Größenordnung, vorzugsweise 0,5 bis 2 µm. Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 60 µm, insbesondere 5 bis 30 µm, vorzugsweise 6 bis 25 µm, wobei die Basisschicht der Differenz zwischen Gesamtfoliendicke und Dicke der Deckschichten entspricht.

Erfindungsgemäß wird die Folie auf der Oberfläche der ersten Deckschicht mit Kaltsiegelkleber versehen. Kaltsiegelkleberschichten unterscheiden sich prinzipiell von Heißsiegelschichten darin, daß die Siegelung bei Raumtemperatur nur durch Anwendung von Druck erfolgt. Dadurch erfährt das Packgut keinerlei Temperaturbelastung. Die Kaltsiegelkleber erfordern keine Aktivierung durch Wasser, Lösemittel oder Wärme. Kaltsiegelkleber sind an sich im Stand der Technik bekannt und basieren beispielsweise auf synthetischem oder künstlichem Latex oder Kautschuk, Polyurethanen oder Acrylpolymeren. Diese Substanzen werden aus geeigneten, gegebenenfalls wässrigen Lösungen auf die Folienoberfläche aufgetragen. Alle üblichen Auftragsverfahren für Kaltsiegelkleber sind geeignet. Zahlreiche Patentschriften beschreiben Kaltsiegelkleber und verbesserte Zusammensetzungen sowie die entsprechenden Auftragsverfahren; beispielsweise in US 3,740,366, US 3,299,010, US 4,012,560, US, 4,387,172, US 4,889,884, US 4,902,370, 4,810,745, US 4,902,370 oder US 4,851,459. Je nach vorgesehenem Anwendungszweck kann der Kaltsiegelkleber in Teilbereichen oder vollflächig aufgetragen werden. Gegebenenfalls kann die Oberfläche der zu beschichtenden Deckschicht zur Verbesserung der Kaltsiegelkleberhaftung mittels Corona, Flamme oder Plasma vorbehandelt werden.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona - oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekungsverhältnisse liegen im Bereich von 4 bis 8 vorzugsweise 5 bis 6. Die Querstreckverhältnisse liegen im Bereich von 5 bis 10, vorzugsweise 7 bis 9.

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Absugswstze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 50°C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leitetelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Trübung

Die Trübung der Folie wurde nach ASTM-D 1003-52 gemessen.

### Glanz

Der Glanz wurde nach DIN 67 530 bestimmt Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportio-nale elektrische Größe angezeigt. Der Meßwert ist dimensionslos und muß mit dem Einstrahlwinkel angegeben werden.

### Oberflächenspannung

Die Oberflächenspannung wurde mittels der sogenannten Tintenmethode (DIN 53 364) bestimmt.

### Reibung

Die Reibung wird nach DIN 53375 gemessen.

### Viskosität

Die Viskosität wird nach DIN 53018, bzw. nach DIN 53019 bestimmt

### Kaltsiegelnahtfestigkeit

Zur Bestimmung der Kaltsiegelnahtfestigkeit werden zwei kaltsiegelbeschichtete Oberflächen gegeneinander "gesiegelt". Hierbei werden zwei 15mm breite Folienstreifen übereinandergelegt und bei Raumtemperatur und einer Siegelzeit von 0,5 sec und einem Siegeldruck von 30 N/cm² in einem Siegelgerät HSG der Firma Brugger verpreßt. Anschließend werden die beiden Streifen nach der T-Peel Methode auseinander gezogen. Hierbei wird in üblicher Weise das Kraft-Weg Diagramm beim Peelen gemessen. Als Einreißfestigkeit wird die maximale Kraft vor dem Einreißen der gesiegelten Probe angegeben.

### Kaltsiegelschichtverankerung

Die Verankerung der Kaltsiegelschicht auf der Folienoberfläche wird mittels eines Klebestreifentest untersucht. Hierfür wird ein Klebeband (z.B. der Fa. Scotch) auf die Kaltsiegelschicht aufgedrückt. Anschließend wird in einer Zugprüfmachine das Klebband von der kaltsiegelbeschichteten Folie wieder abgezogen, wobei in üblicher Weise das Kraft-Weg Diagramm beim Abziehen gemessen wird. Bei einer vollständigen Übertragung der Kaltsiegetkteberschicht auf das Klebeband entspricht die Kraft, die zum Abziehen von Klebeband und Kaltsiegelschicht erforderlich ist, der Verankerung der Kaltsiegelschicht.

Die Erfindung wird nun an Hand von Beispielen erläutert:

### Beispiel 1

Es wurde durch Coextrusion und anschließende stufenweise Orientierung in Längs- und Querrichtung eine transparente dreischichtige Folie mit beidseitigen Deckschichten mit einer Gesamtdicke von 20 µm hergestellt. Die Deckschichten hatten eine Dicke von jeweils 0,6 µm.

### Basisschicht:

| | |
|---|---|
| 87,79 Gew.-% | isotaktisches Propylenhomopolymer mit einem Schmelzpunkt von 163 °C und einem Schmelzflußindex von 3,4 g/10min. |
| 12,0 Gew.-% | Kohlenwasserstoffharz mit einem Erweichungspunkt von 120 °C und einem mittleren Molekulargewicht Mw von 1000 |
| 0,15 Gew.% | N,N-bis-ethoxyalkylamin (Antistatikum) |
| 0,06 Gew.% | Erucasäureamid |

### Deckschicht 1:

| | |
|---|---|
| ca. 98,77 Gew.% | statistische Ethylen-Propylen-Butylen-Terpolymer mit einem Ethylengehalt von 3 Gew.% und einem Butylengehalt von 7 Gew.-% (Rest Propylen) |
| 0,33 Gew.-% | SiO₂ als Antiblockmittel mit einer mittleren Teilchengröße von 2 µm |
| 0,90 Gew.-% | Polydimethylsiloxan mit einer Viskosität von 300.000 mm²/s |

### Deckschicht 2:

| | |
|---|---|
| ca. 99,37 Gew.% | statistische Ethylen-Propylen-Copolymer mit einem Ethylengehalt von ca. 4,5 Gew.-% und einem Erweichungspunkt von ca. 130 °C |
| 0,33 Gew.-% | SiO₂ als Antiblockmittel mit einer mittleren Teilchengröße von 2 µm |
| 0,30 Gew.% | Polyethylenwachs mit einem mittleren Molekulargewicht Mn von 1000 |

Die Herstellungsbedingungen in den einzelnen Verfahrensschritten waren:

| | | | |
|---|---|---|---|
| Extrusion: | Temperaturen | Basisschicht: | 260 °C |
| | | Deckschichten: | 240 °C |
| | Temperatur der Abzugswalze: | | 20 °C |
| Längsstreckung: | Temperatur. | | 110 °C |
| | Längsstreckverhältnis: | | 5,5 |
| Querstreckung: | Temperatur: | | 160 °C |
| | Querstreckverhältnis: | | 9 |
| Fixierung: | Temperatur: | | 140 °C |
| | Konvergenz: | | 20 % |

Bei dem Querstreckverhältnis λ_{Q} = 9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

### Beispiel 2

Es wurde eine Folie wie in Beispiel 1 beschrieben hergestellt Im Unterschied zu Beispiel 1 wurde der Gehalt an Polydimethylsiloxan auf 1,2 Gew.-% erhöht. Die übrige Zusammensetzung und die Herstellbedingungen wurden gegenüber Beispiel 1 nicht geändert.

### Vergleichsbeispiel 1

Es wurde eine Folie wie in Beispiel 1 beschrieben hergestellt. Im Unterschied zu Beispiel 1 enthielt die Folie jetzt in der Basisschicht kein Kohlenwasserstoffharz. Die übrige Zusammensetzung und die Herstellbedingungen wurden gegenüber Beispiel 1 nicht geändert.

### Vergleichsbeispiel 2

Es wurde eine Folie wie in Beispiel 1 beschrieben hergestellt. Im Unterschied zu Beispiel 1 enthielt die Folie jetzt in der ersten Deckschicht kein Polydimethylsiloxan. Die übrige Zusammensetzung und die Herstellbedingungen wurden gegenüber Beispiel 1 nicht geändert.

### Vergleichsbeispiel 3

Es wurde eine Folie wie in Beispiel 1 beschrieben hergestellt. Im Unterschied zu

Beispiel 1 enthielt die Folie jetzt in der ersten Deckschicht 0,9 Gew.% eines Polydimethylsiloxans mit einer Viskosität von 30.000 mm²/sec. Die übrige Zusammensetzung und die Herstellbedingungen wurden gegenüber Beispiel 1 nicht geändert.

Alle Folien nach den Beispielen und dem Vergleichsbeispiel wurden im Tiefdruckverfahren auf der Oberfläche der Deckschicht 1 mit einem Kaltsiegelkleber C2881 der Fa. Bostik Findley beschichtet.

Die Eigenschaften der Folien nach den Beispielen und dem Vergleichsbeispiel sind in der nachstehenden Tabelle zusammengefaßt:

| **Beispiel Vergleichsbeispiel** | **Basisschicht Homopolymer plus** | **Deckschicht** 1 **(= mit KSK beschichtete Seite)** | | | **KSK Verankerung** | **Siegelnahtfestigkeit** | **Reibungskoeffizient** |
|---|---|---|---|---|---|---|---|
| | | Antiblock (SiO2) | Siliconöl | | N/15mm | N/15mm | |
| | | | % | Viskosität/ mm²/s | | | |
| B1 | 12 % KW Harz | 0,33% | 0,9 | 300.000 | 4,3 | 4,4. | 0,22 |
| B2 | 12 % KW Harz | 0,33% | 1,2 | 300.000 | 4,0 | 3,9 | 0,18 |
| VB1 | 0 % Harz | 0,33% | 0,9 | 300.000 | 2,6 | 3 | 0,23 |
| VB2 | 12 % KW Harz | 0,33% | keins | | 4,5 | 4,5 | 0,80 |
| VB 3 | 12 % KW Harz | 0,33% | 0,9 | 30.000 | 2,7 | 2,8 | 0,26 |

| | | | | | | | |
|---|---|---|---|---|---|---|---|
| KSK = Kaltsiegelkleber B= Beispiel; VB = Vergleichsbeispiel | | | | | | | |

## Patentansprüche

1. Mehrschichtige, transparente, biaxial orientierte Polypropylenfolie aus einer Basisschicht und mindestens einer ersten Deckschicht, wobei die Basisschicht ein Kohlenwasserstoffharz und die erste Deckschicht ein Polydialkylsiloxan mit einer Viskosität von mindestens 200.000 mm²/sec enthält, **dadurch gekennzeichnet, dass** diese erste Deckschicht auf ihrer äußeren Oberfläche eine Kaltsiegelkleberbeschichtung aufweist und auf der, der ersten Deckschicht gegenüberliegenden Oberfläche, eine Release-Schicht als Außenschicht aufgebracht ist, deren Oberfläche gegenüber Kaltsiegelbeschichtungen eine geringe Haftung aufweist, wobei diese Release Schicht ein Release Lack, eine Releasefolie oder eine zweite coextrudierte Release-Deckschicht ist.

2. Polypropylenfolie gemäß Anspruch 1, **dadurch gekennzeichnet, daß** die Basisschicht ein isotaktisches Polypropylen mit einem Schmelzpunkt von 155 - 165°C enthält.

3. Polypropylenfolie gemäß Anspruch 1 und/oder 2, **dadurch gekennzeichnet, daß** die Basisschicht das Kohlenwasserstoffharz in einer Menge von 5 bis 20 Gew.-% bezogen auf das Gewicht der Basisschicht enthält.

4. Polypropylenfolie gemäß einem oder mehreren der Ansprüche 1 bis 3, **dadurch gekennzeichnet, daß** das Kohlenwasserstoffharz ein nichthydriertes Styrolpolymerisat, ein Methylstyrol-Styrol-Copolymerisat, ein Pentadien- bzw. Cyclopentadiencopolymerisat, ein α - oder ß-Pinen-Polymerisat, Kolophonium oder Kolophoniumderivate oder Terpenpolymerisate und hydrierte Verbindungen hiervon bzw. ein hydriertes α-Methylstyrol-Vinyltoluol-Copolymerisat oder gegebenenfalls Mischungen von diesen enthält.

5. Polypropylenfolie gemäß einem oder mehreren der Ansprüche 1 bis 4, **dadurch gekennzeichnet, daß** das Kohlenwasserstoffharz einen Erweichungspunkt von 100 bis 160°C aufweist.

6. Polypropylenfolie gemäß einem oder mehreren der Ansprüche 1 bis 5, **dadurch gekennzeichnet, daß** das Polydialkylsiloxon in der ersten Deckschicht in einer Menge 0,5 bis 3 Gew.-% bezogen auf das Gewicht der Deckschicht enthalten ist.

7. Polypropylenfolie gemäß einem oder mehreren der Ansprüche 1 bis 6, **dadurch gekennzeichnet, daß** das Polydialkylsiloxan eine Viskosität von 250.000 bis 500.000 mm²/sec aufweist.

8. Polypropylenfolie gemäß einem oder mehreren der Ansprüche 1 bis 7, **dadurch gekennzeichnet, daß** die erste Deckschicht aus isotaktischem Propylenhomopolymer, Propylen-Copolymeren oder Propylenterpolymeren oder aus Mischungen dieser Polymeren aufgebaut ist, wobei die Propylenco- und -terpolymeren einen Propylengehalt von mindestens 80 Gew.-% bezogen auf das polymere aufweisen.

9. Polypropylenfolie gemäß einem oder mehreren der Ansprüche 1 bis 8, **dadurch gekennzeichnet, daß** das die erste Deckschicht 0,1 bis 2 Gew.-% Antiblockmittel enthält.

10. Polypropylenfolie gemäß einem oder mehreren der Ansprüche 1 bis 9, **dadurch gekennzeichnet, daß** das die erste Deckschicht aus Propylenpolymeren, Polydialkylsiloxan und Antiblockmittel besteht.

11. Polypropylenfolie gemäß einem oder mehreren der Ansprüche 1 bis 10, **dadurch gekennzeichnet, daß** die Oberfläche der ersten Deckschicht mittels Corona, Plasma oder Flamme vorbehandelt ist.

12. Polypropylenfolie gemäß einem oder mehreren der Ansprüche 1 bis 11, **dadurch gekennzeichnet, daß** auf der gegenüberliegenden Oberfläche der Basisschicht eine zweite Deckschicht aus polyolefinischen Polymeren angebracht ist.

13. Polypropylenfolie gemäß einem oder mehreren der Ansprüche 1 bis 12, **dadurch gekennzeichnet, daß** die Basisschicht Antistatikum, vorzugsweise tertiäres aliphatisches Amin, enthält.

14. Polypropylenfolie gemäß einem oder mehreren der Ansprüche 1 bis 13, **dadurch gekennzeichnet, daß** alle Schichten der Folie Neutralisationsmittel und Stabilisator enthalten.

15. Verfahren zur Herstellung einer Polypropylenfolie nach einem der Anspruch 1 bis 14, **dadurch gekennzeichnet, daß** die Beschichtung der biaxial orientierten Folie mit dem Kaltsiegelkleber im Tiefdruckverfahren erfolgt.

## Claims

1. A multilayered transparent, biaxially oriented polypropylene film comprising a base layer and at least one first cover layer, wherein the base layer contains a hydrocarbon resin and the cover layer contains a polydialkyl siloxane having a viscosity of at least 200,000 mm²/second, and **characterized in that** this first cover layer has a cold sealing adhesive coating on its outer surface and a release layer is applied as an outer layer to the surface facing the first cover layer, the surface of which release layer has low adhesion compared with cold sealing adhesive coatings, this release layer being a release varnish, a release film or a second coextruded release cover layer.

2. The polypropylene film according to claim 1, **characterized in that** the base layer contains an isotactic polypropylene having a melting point in the range from 155-165 °C.

3. The polypropylene film according to claim 1 and/or 2, **characterized in that** the base layer contains the hydrocarbon resin in a quantity from 5 to 20 percent by weight relative to the weight of the base layer.

4. The polypropylene film according to one or more of claims 1 to 3, **characterized in that** the hydrocarbon resin contains a non-hydrogenated styrene polymer, a methylstyrene-styrene copolymer, a pentadiene and/or cyclopentadiene copolymer, an *α-*pinene or *β*-pinene polymer, colophony or colophony derivatives or terpene polymers and hydrogenated compounds thereof, and/or a hydrated α-methylstyrene-vinyl toluene copolymer or possibly mixtures thereof.

5. The polypropylene film according to one or more of claims 1 to 4, **characterized in that** the hydrocarbon resin has a softening point in the range from 100 to 160°C.

6. The polypropylene film according to one or more of claims 1 to 5, **characterized in that** the first cover layer contains the polydialkyl siloxane in a quantity from 0.5 to 3 percent by weight relative to the weight of the cover layer.

7. The polypropylene film according to one or more of claims 1 to 6, **characterized in that** the polydialkyl siloxane has a viscosity in the range from 250,000 to 500,000 mm²/second.

8. The polypropylene film according to one or more of claims 1 to 7, **characterized in that** the first cover layer is synthesized from isotactic propylene homopolymer, propylene copolymers, or propylene terpolymers or mixtures of these polymers, the propylene copolymers and terpolymers having a propylene content of at least 80 percent by weight relative to the polymer.

9. The polypropylene film according to one or more of claims 1 to 8, **characterized in that** the first cover layer contains 0.1 to 2 percent by weight antiblocking agent.

10. The polypropylene film according to one or more of claims 1 to 9, **characterized in that** the first cover layer comprises propylene polymers, polydialkyl siloxane, and antiblocking agent.

11. The polypropylene film according to one or more of claims 1 to 10, **characterized in that** the surface of the first cover layer is undergoes corona, plasma, or flame pretreatment.

12. The polypropylene film according to one or more of claims 1 to 11, **characterized in that** a second cover layer made of polyolefinic polymers is applied to the opposite surface of the base layer.

13. The polypropylene film according to one or more of claims 1 to 12, **characterized in that** the base layer contains an antistatic agent, preferably tertiary aliphatic amine.

14. The polypropylene film according to one or more of claims 1 to 13, **characterized in that** all layers of the film contain neutralising agents and a stabiliser.

15. A method for manufacturing a polypropylene film according to any one of claims 1 to 14, **characterized in that** the coating of the biaxially oriented film with the cold sealing adhesive is performed in the gravure printing method.

## Revendications

1. Film transparent à orientation biaxiale en polypropylène multicouches constitué d'une couche de base et d'au moins une première couche de couverture, la couche de base contenant une résine d'hydrocarbure et la première couche de couverture contenant un polydialkyle siloxane d'une viscosité d'au moins 200.000 mm²/seconde et **caractérisé en ce que** cette première couche de couverture comporte sur sa surface extérieure un revêtement en adhésif scellable à froid et sur la surface opposée à la première couche de couverture est appliquée en tant que couche extérieure une couche release dont la surface fait preuve d'une faible adhérence, par rapport aux revêtements scellables à froid, ladite couche release étant une laque release, un film release ou une deuxième couche de couverture release co-extrudée.

2. Film en polypropylène selon la revendication 1, **caractérisé en ce que** la couche de base est un polypropylène isotactique avec un point de fusion de 155 à 165°C.

3. Film en polypropylène selon la revendication 1 et/ou 2, **caractérisé en ce que** la couche de base contient la résine d'hydrocarbure dans une quantité de 5 à 20 % en poids en rapport au poids de la couche de base.

4. Film en polypropylène selon l'une quelconque ou plusieurs des revendications 1 à 3, **caractérisé en ce que** la résine d'hydrocarbure contient un produit de polymérisation du styrène non hydrogéné, un produit de copolymérisation de méthylstyrène, un produit de copolymérisation de pentadiène ou de cyclopentadiène, un produit de polymérisation de α-pinène ou de β-pinène, de la colophane ou des dérivés de colophane ou des produits de polymérisation de terpène et des composés hydrogénés de ces derniers, un produit de copolymérisation hydrogéné de α-méthylstyrène-vinyltoluène ou le cas échéant des mélanges de ces derniers.

5. Film en polypropylène selon l'une quelconque ou plusieurs des revendications 1 à 4, **caractérisé en ce que** la résine d'hydrocarbure présente un point de ramollissement de 100 à 160°C.

6. Film en polypropylène selon l'une quelconque ou plusieurs des revendications 1 à 5, **caractérisé en ce que** le polydialkyle siloxane est contenu dans la première couche de couverture dans une quantité de 0,5 à 3 % en poids en rapport au poids de la couche de couverture.

7. Film en polypropylène selon l'une quelconque ou plusieurs des revendications 1 à 6, **caractérisé en ce que** le polydialkyle siloxane présente une viscosité de 250.000 à 500.000 mm²/seconde.

8. Film en polypropylène selon l'une quelconque ou plusieurs des revendications 1 à 7, **caractérisé en ce que** la première couche de couverture est constituée en homo-polymère isotactique de propylène, en copolymères de propylène ou en terpolymères de propylène ou en mélanges desdits polymères, les copolymères et terpolymères de propylène présentant une teneur en propylène d'au moins 80 % en poids en rapport au polymère.

9. Film en polypropylène selon l'une quelconque ou plusieurs des revendications 1 à 8, **caractérisé en ce que** la première couche de couverture contient de 0,1 à 2 % en poids d'agent antibloquant.

10. Film en polypropylène selon l'une quelconque ou plusieurs des revendications 1 à 9, **caractérisé en ce que** la première couche de couverture est constituée de polymères de propylène, de polydialkyle siloxane et d'agent antibloquant.

11. Film en polypropylène selon l'une quelconque ou plusieurs des revendications 1 à 10, **caractérisé en ce que** la surface de la première couche de couverture a subi un prétraitement Corona, au plasma ou à la flamme.

12. Film en polypropylène selon l'une quelconque ou plusieurs des revendications 1 à 11, **caractérisé en ce que** sur le surface opposée à la couche de base est disposée une deuxième couche de couverture en polymères polyoléfines.

13. Film en polypropylène l'une quelconque ou plusieurs des revendications 1 à 12, **caractérisé en ce que** la couche de base contient un antistatique, de préférence de l'amine aliphatique tertiaire.

14. Film en polypropylène selon l'une quelconque ou plusieurs des revendications 1 à 13, **caractérisé en ce que** toutes les couches du film contiennent un agent neutralisant et un stabilisateur.

15. Procédé de production d'un film en polypropylène selon l'une quelconque des revendications 1 à 14, **caractérisé en ce que** le revêtement du film à orientation biaxiale s'effectue avec l'adhésif scellable à froid, par procédé d'héliogravure variable.
